# EUROPEAN PATENT APPLICATION

(11) **EP 4 617 182 A1**
(43) Date of publication of application: **17.09.2025**
(21) Application number: 23955348.0
(22) Date of filing: 19.12.2023
(51) Int. Cl.: B65C 9/40, B65C 9/00, B65C 9/02, G01B 11/00

(54) **ADHESIVE APPLICATION POSITION DETECTION METHOD, APPARATUS, AND SYSTEM**

(30) Priority: 08.10.2023 CN 202311289726
(71) Applicant: Contemporary Amperex Technology (Hong Kong) Limited, Hong Kong (HK)
(72) Inventor: QIU, Shiping, Ningde, Fujian 352100 (CN); LI, Bingchao, Ningde, Fujian 352100 (CN); LIN, Jia, Ningde, Fujian 352100 (CN); WANG, Lili, Ningde, Fujian 352100 (CN); LIU, Yang, Ningde, Fujian 352100 (CN); ZHAO, Bin, Ningde, Fujian 352100 (CN)
(74) Representative: Gong, Jinping
(86) International application number: PCT/CN2023/139818
(87) International publication number: WO 2025/077009

(57) **Abstract**

A gluing position inspection method, device, and system are provided and relate to the technical field of battery production, to resolve at least problems in the related art such as long treatment time, high costs, a low production capacity, and the influence of omission of regluing on heat dissipation and performance of a battery pack caused due to online manual regluing. The inspection method is applied to an inspection device (21). The inspection device includes an inspection apparatus (211), a pick-and-place apparatus (212), a cache apparatus (213), and a storage apparatus (214). The inspection method includes: determining an inspection result of a current battery cell based on an image of a surface of the current battery cell, where the image of the surface of the current battery cell is captured by the inspection apparatus at an inspection position, and the image of the surface of the current battery cell includes a gluing position; and controlling a picking portion of the pick-and-place apparatus (212) to move the current battery cell to the cache apparatus (213) and move a spare battery cell in the storage apparatus to the inspection position when the inspection result of the current battery cell indicates that there is a defect at the gluing position of the current battery cell.

## Description

### CROSS-REFERENCE TO RELATED APPLICATIONS

This disclosure claims priority to Chinese Patent Application No. 202311289726.7, filed on October 8, 2023 and entitled "GLUING POSITION INSPECTION METHOD, DEVICE, AND SYSTEM", which is incorporated herein by reference in its entirety.

### TECHNICAL FIELD

This disclosure relates to, but is not limited to, the technical field of battery production, and in particular, relates to a gluing position inspection method, device, and system.

### BACKGROUND

New energy batteries are increasingly widely used in life and industries. For example, new energy vehicles mounted with batteries have been widely used. In addition, the batteries are also increasingly used in the field of energy storage and the like.

In the related art, when gluing of battery cells is faulty, online manual handling is usually required, which is time-consuming and costly and affects a production capacity of a production line as well. In addition, omission of regluing is likely to occur during manual gluing, and as a result, the battery cells with faulty glue are grouped as usual, which affects heat dissipation and service life of battery packs.

### SUMMARY

Embodiments of this disclosure provide a gluing position inspection method, device, and system.

Technical solutions in the embodiments of this disclosure are implemented in the following manners.

An embodiment of this disclosure provides a gluing position inspection method, applied to an inspection device, where the inspection device includes an inspection apparatus, a pick-and-place apparatus, a cache apparatus, and a storage apparatus, and the inspection method includes:
determining an inspection result of a current battery cell based on an image of a surface of the current battery cell, where the image of the surface of the current battery cell is captured by the inspection apparatus at the inspection position, and the image of the surface of the current battery cell includes a gluing position; and
controlling a picking portion of the pick-and-place apparatus to move the current battery cell to the cache apparatus and move a spare battery cell in the storage apparatus to the inspection position when the inspection result of the current battery cell indicates that there is a defect at the gluing position of the current battery cell.

In some embodiments, the determining an inspection result of a current battery cell based on an image of a surface of the current battery cell includes: identifying the image of the surface of the current battery cell to obtain surface rim information and gluing rim information of the current battery cell; and determining the inspection result of the current battery cell based on the surface rim information and gluing rim information of the current battery cell.

In these embodiments of this disclosure, the inspection result is determined through the rim information and gluing rim information of the battery cell, which improves accuracy of the inspection result of the gluing position, thereby improving gluing quality of the battery cell.

In some embodiments, the surface rim information of the current battery cell includes at least one rim, the gluing rim information of the current battery cell includes at least one gluing rim, and each rim is in a one-to-one correspondence with each gluing rim; and the determining the inspection result of the current battery cell based on the surface rim information and gluing rim information of the current battery cell includes: determining a distance between each rim and a corresponding gluing rim; and determining the inspection result of the current battery cell based on each distance.

In these embodiments of this disclosure, the inspection result of the gluing position of the battery cell is determined based on the distance between each rim and the corresponding gluing rim, which improves the accuracy of the inspection result, thereby reducing a misjudgment rate of the defect of the battery cell.

In some embodiments, the determining the inspection result of the current battery cell based on each distance includes at least one of the following: using, as the inspection result of the current battery cell, the first inspection result indicating that there is no defect when each distance is in the corresponding distance range; or using, as the inspection result of the current battery cell, the second inspection result indicating that there is a defect when at least one distance is out of the corresponding distance range.

In these embodiments of this disclosure, each distance is compared with the corresponding distance range to determine whether there is the defect at the gluing position of the battery cell, which shortens inspection duration and also improves accuracy of the inspection result.

In some embodiments, the inspection method further includes: determining an inspection result of the spare battery cell based on an image of a surface of the spare battery cell; and controlling a picking portion of the pick-and-place apparatus to move the spare battery cell to the cache apparatus and move a next spare battery cell in the storage apparatus to the inspection position when the inspection result of the spare battery cell indicates that there is a defect at a gluing position of the spare battery cell.

In these embodiments of this disclosure, the spare battery cell is inspected again, to ensure that there is no defect at the gluing position of the battery cell flowing in, thereby reducing a possibility of grouping the battery cell with faulty glue as usual.

In some embodiments, the inspection method further includes: obtaining the number of battery cells in the target apparatus; and generating and outputting prompt information corresponding to the target apparatus when the number of battery cells in the target apparatus meets a preset condition, where the target apparatus includes at least one of the following: the cache apparatus and the storage apparatus.

In these embodiments of this disclosure, the number of battery cells in the cache apparatus and/or the storage apparatus is monitored, and a corresponding prompt is provided when a condition is met, so that staff can handle a problem in a timely manner, thereby ensuring normal storage and replacement of the next faulty battery cell and further ensuring that the production line is not stopped when gluing of the battery cell is faulty.

An embodiment of this disclosure provides a gluing position inspection device including:
a frame;
an inspection apparatus, disposed on the frame, where the inspection apparatus is configured to capture an image of a surface of a battery cell at an inspection position;
a storage apparatus, disposed on the frame, where the storage apparatus is configured to store at least one spare battery cell;
a cache apparatus, disposed on the frame and configured to cache at least one defective battery cell; and
a pick-and-place apparatus, disposed on the frame, where the pick-and-place apparatus has a picking portion for picking and placing the battery cell, and the picking portion is able to reciprocate among the inspection position, the storage apparatus, and the cache apparatus.

In this embodiment of this disclosure, the picking portion directly removes the faulty battery cell, which reduces the costs and also shortens the processing time compared with online manual regluing. The picking portion automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack. The inspection apparatus is used for inspection, so that a degree of manual intervention is reduced, which reduces the costs and improves the inspection efficiency compared with manual inspection. The pick-and-place apparatus replaces the defective battery cell with the spare battery cell, which requires no participation of an operator in a replacement process, thereby facilitating a reduction in labor costs. The inspection apparatus captures the image of the surface of the battery cell at the inspection position. Because the picking portion can reciprocate among the inspection position, the storage apparatus, and the cache apparatus, when the inspection result of the battery cell indicates that there is a defect, the picking portion of the pick-and-place apparatus can move to the inspection position to pick the defective battery cell, and the picking portion that has picked the defective battery cell moves to the cache apparatus, to transfer the defective battery cell at the inspection position to the cache apparatus. After the picking portion releases the defective battery cell to the cache apparatus, the picking portion picks the spare battery cell from the storage apparatus and transfers the spare battery cell to the inspection position. The picking portion can reciprocate among the inspection position, the storage apparatus, and the cache apparatus, which can remove the defective battery cell and also resupply the spare battery cell to the inspection position, to implement automatic operation of the device while improving gluing quality of the battery cell, thereby avoiding shutdown to the greatest extent when the battery cell at the inspection position has a defect.

In some embodiments, the storage apparatus includes: a first base; a reference baffle plate connected to the first base; an adjustment baffle plate, where a first accommodating cavity for accommodating the battery cell is enclosed by the adjustment baffle plate, the first base, and the reference baffle plate; and a drive assembly, disposed on the first base, where the drive assembly is configured to drive the adjustment baffle plate to move, to position the battery cell in the first accommodating cavity.

In these embodiments of this disclosure, the adjustment baffle plate is adjusted, to adaptively position battery cells with different sizes.

In some embodiments, adjustment baffle plates are disposed at two ends of the first accommodating cavity in the first direction, and the drive assembly is configured to drive the adjustment baffle plates at both the ends to approach or leave each other in the first direction.

In these embodiment of this disclosure, the adjustment baffle plates at the two ends approach or leave each other, so that the adjustment baffle plates at the two ends can center and position the battery cells with different sizes in the first direction.

In some embodiments, the drive assembly includes: a gear, projected in an axial direction of the gear, where a rotation center of a projection zone of the gear is fixed relative to a position of a projection zone of the first base; gear racks, meshed with the gear, where the gear racks are disposed on both opposite sides of the gear in a radial direction of the gear; mounting bases, where a gear rack on each side is correspondingly provided with the mounting base, and the mounting bases are respectively connected to a corresponding gear rack and a corresponding adjustment baffle plate; and a driver, configured to provide drive forces for transmission of the gears and gear racks, so that the adjustment baffle plates at both the ends approach or leave each other in the first direction.

In these embodiments of this disclosure, the corresponding mounting bases are driven to move under the transmission of the gears and gear racks meshed with each other, so that the adjustment baffle plates connected to the mounting bases approach and leave each other, to adaptively center and position the battery cells with different sizes in the first direction.

In some embodiments, the driver is located on a side, facing toward the first accommodating cavity, of the first base, and the adjustment baffle plate on one end is disposed on the driver, so that the driver drives the adjustment baffle plate to move; and the driver is located at one end, facing away from the reference baffle plate in the second direction, of the adjustment baffle plate, the second direction intersects with the first direction, and the gear and the gear rack are both located between the reference baffle plate and the driver in the second direction.

In these embodiments of this disclosure, the position of the driver is arranged, so that a side, facing away from the first accommodating cavity, of the first base can be firmly mounted on the frame, which facilitates a reduction in a dangling degree of the first base relative to the frame. In addition, the position arrangement of the driver can reduce a possibility of interference between the driver and the gears, and interference between the gear racks and the reference baffle plate.

In some embodiments, there are multiple reference baffle plates, the multiple reference baffle plates are arranged at intervals in the second direction, and the second direction intersects with the first direction.

In these embodiments of this disclosure, the multiple reference baffle plates arranged at intervals can respectively abut against and position multiple battery cells arranged in the second direction, which facilitates placement of the multiple spare battery cells on the storage apparatus.

In some embodiments, the reference baffle plate includes multiple subplates, and the multiple subplates are sequentially arranged at intervals in the first direction.

In these embodiments of this disclosure, the picking portion picks the spare battery cell through the gap between adjacent subplates, the picking portion picks the spare battery cell without being affected by the heights of the subplates, and the corresponding heights of the subplates can be set based on an actual positioning requirement.

In some embodiments, the cache apparatus includes: a second base; and side baffle plates, connected to the second base, where there are multiple side baffle plates, at least one second accommodating cavity for accommodating the battery cell is enclosed by the multiple side baffle plates and the second base, and multiple side baffle plates corresponding to each second accommodating cavity are arranged at intervals in a circumferential direction of the second accommodating cavity.

In these embodiments of this disclosure, in the process of placing the defective battery cell into the cache apparatus, the picking portion can pass through the gap between two adjacent side baffle plates, and the picking portion places the battery cell into the cache apparatus without being affected by the height of the side baffle plates.

In some embodiments, the inspection device further includes: a conveying apparatus, configured to convey the battery cell to the inspection position, where a direction in which the conveying apparatus conveys the battery cell is a third direction, and a direction intersecting with the third direction is a fourth direction; and a paper peeling apparatus, configured to peel release paper off a glue tape of the battery cell at the inspection position, where the paper peeling apparatus is located on one side of the conveying apparatus in the fourth direction, the pick-and-place apparatus is located on the other side of the conveying apparatus in the fourth direction, and the storage apparatus and the cache apparatus are both located on one side, facing away from the paper peeling apparatus in the fourth direction, of the pick-and-place apparatus.

In these embodiments of this disclosure, the paper peeling apparatus is located on one side of the conveying apparatus in the fourth direction, the pick-and-place apparatus is located on the other side of the conveying apparatus in the fourth direction, so that positions of the paper peeling apparatus and the pick-and-place apparatus avoid the battery cell conveyed on the conveying apparatus, which facilitates smooth conveying of the battery cell on the conveying apparatus. The picking portion can reciprocate among the inspection position, the storage apparatus, and the cache apparatus, and because the storage apparatus and the cache apparatus are both located on the side, facing away from the paper peeling apparatus in the fourth direction, of the pick-and-place apparatus, when the picking portion of the pick-and-place apparatus picks the defective battery cell from the inspection position, the picking portion transfers the picked defective battery cell to the cache apparatus, and the picking portion picks the spare battery cell from the storage apparatus. The picking portion needs to cover a short distance, and therefore, an overall size of the pick-and-place apparatus can be made small, which can reduce space occupied by the pick-and-place apparatus. In addition, there is enough space for arranging the cache apparatus and the storage apparatus on the side, facing away from the paper peeling apparatus in the fourth direction, of the pick-and-place apparatus, which reduces a possibility that the cache apparatus and the storage apparatus interfere with another component.

An embodiment of this disclosure further provides a gluing position inspection method including:
capturing, by an inspection apparatus, an image of a surface of a battery cell at an inspection position;
transferring, by a picking portion of the pick-and-place apparatus, the defective battery cell at the inspection position to a cache apparatus when an inspection result of the battery cell indicates that there is a defect, where the inspection result of the battery cell is determined based on the image of the surface of the battery cell; and
transferring, by the picking portion of the pick-and-place apparatus, a spare battery cell at the storage apparatus to the inspection position when the defective battery cell at the inspection position is transferred to the cache apparatus.

In this embodiment of this disclosure, the picking portion directly removes the faulty battery cell, which reduces the costs and also shortens the processing time compared with online manual regluing. The picking portion automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack. The picking portion replaces the defective battery cell with the spare battery cell, and after replacement, the spare battery cell can enter a next processing procedure as appropriate, so that there is no need to stop a machine even if the defective battery cell is detected.

In some embodiments, the inspection method further includes: conveying, by the conveying apparatus, the battery cell at the inspection position to a next set position when the inspection result of the battery cell indicates that there is no defect.

In these embodiments of this disclosure, the conveying apparatus conveys the battery cell at the inspection position to a next set position, and a next to-be-inspected battery cell is received at the vacated inspection position for inspection.

In some embodiments, the inspection method further includes: capturing, by the inspection apparatus, an image of a surface of the spare battery cell at the inspection position; transferring, by a picking portion of the pick-and-place apparatus, the defective spare battery cell at the inspection position to the cache apparatus when an inspection result of the spare battery cell indicates that there is a defect, where the inspection result of the spare battery cell is determined based on the image of the surface of the spare battery cell; and transferring, by the picking portion of the pick-and-place apparatus, a next spare battery cell at the storage apparatus to the inspection position when the defective spare battery cell at the inspection position is transferred to the cache apparatus.

In these embodiments of this disclosure, after the defective battery cell is replaced with the spare battery cell, the inspection apparatus further needs to inspect the spare battery cell again, to reduce a possibility that the defective battery cell is conveyed to a next processing procedure.

An embodiment of this disclosure further provides a gluing position inspection system including an inspection device and a control apparatus, where the inspection device includes an inspection apparatus, a pick-and-place apparatus, a cache apparatus, and a storage apparatus;
the inspection apparatus is configured to capture an image of a surface of a current battery cell at an inspection position, where the image of the surface includes a gluing position;
the control apparatus is configured to: determine an inspection result of the current battery cell based on the image of the surface of the current battery cell; and generate a control instruction and send the control instruction to the pick-and-place apparatus when the inspection result of the current battery cell indicates that there is a defect at the gluing position of the current battery cell; and
the pick-and-place apparatus is configured to: move the current battery cell to the cache apparatus and move the spare battery cell in the storage apparatus to the inspection position by using a picking portion based on the control instruction.

In some embodiments, the inspection apparatus is further configured to capture an image of a surface of the spare battery cell at the inspection position; and the control apparatus is further configured to: determine an inspection result of the spare battery cell based on the image of the surface of the spare battery cell; and generate a control instruction and send the control instruction to the pick-and-place apparatus when the inspection result of the spare battery cell indicates that there is a defect at a gluing position of the spare battery cell, so that the pick-and-place apparatus moves the spare battery cell to the cache apparatus and moves a next spare battery cell in the storage apparatus to the inspection position by using the picking portion.

In these embodiments of this disclosure, the image of the surface of the spare battery cell is captured, so that the spare battery cell is inspected again, to ensure that there is no defect at the gluing position of the battery cell flowing into the production line, thereby reducing a possibility of grouping the battery cell with faulty glue as usual.

In some embodiments, the inspection device further includes a paper peeling apparatus; the control apparatus is further configured to send a paper peeling instruction to the paper peeling apparatus; and the paper peeling apparatus is configured to peel release paper off the surface of the current battery cell based on the paper peeling instruction, to expose the gluing position of the current battery cell.

In some embodiments of this disclosure, the paper peeling apparatus is integrated into the inspection device, to implement multiple processes of peeling off the release paper, inspecting gluing, automatically replacing a faulty battery cell, and the like on the same device, thereby reducing costs of the device and expanding an application scenario of the device.

In some embodiments, the inspection system further includes a prompt apparatus; and the control apparatus is further configured to perform at least one of the following: obtaining a first number of battery cells in the cache apparatus, generating first prompt information when the first number is not less than a first threshold, and sending the first prompt information to the prompt apparatus, so that the prompt apparatus outputs the first prompt information; and obtaining a second number of spare battery cells in the storage apparatus, generating second prompt information when the second number is not greater than a second threshold, and sending the second prompt information to the prompt apparatus, so that the prompt apparatus outputs the second prompt information.

In these embodiments of this disclosure, on the one hand, a prompt apparatus is also integrated into the inspection system, which expands application scenarios of the system. On the other hand, the number of battery cells in the cache apparatus and/or the storage apparatus is monitored in real time, and a corresponding prompt is provided, so that staff can handle a problem in a timely manner, thereby ensuring normal storage and replacement of the next faulty battery cell and further ensuring that the production line is not stopped when gluing of the battery cell is faulty.

In some embodiments, the control apparatus is further configured to send a capturing instruction to the inspection apparatus; and the inspection apparatus is configured to capture an image of a surface of the current battery cell based on the capturing instruction.

In these embodiments of this disclosure, the inspection apparatus captures the image based on the capturing instruction, which reduces the number of capturing times and lowers hardware consumption compared with real-time capturing.

In some embodiments, the control apparatus is further configured to: obtain information of the current battery cell; and generate an adjustment instruction and send the adjustment instruction to the pick-and-place apparatus when the information of the current battery cell is different from information of a previous battery cell; and the pick-and-place apparatus is further configured to update a working parameter of the picking portion based on the adjustment instruction.

In these embodiments of this disclosure, on the one hand, two adjacent battery cells are compared, to quickly determine whether it is necessary to change the model. On the other hand, the working parameter of the picking portion is adjusted to compatibly grab battery cells with different sizes, which improves universality and adaptability of the inspection device and can meet a production requirement of a highly flexible battery.

In the embodiments of this disclosure, the inspection result of the current battery cell is determined based on the image of the surface of the current battery cell; the image of the surface of the current battery cell is captured by the inspection apparatus at the inspection position, and the image of the surface of the current battery cell includes a gluing position; and the picking portion of the pick-and-place apparatus is controlled to move the current battery cell to the cache apparatus and move the spare battery cell in the storage apparatus to the inspection position when the inspection result of the current battery cell indicates that there is the defect at the gluing position of the current battery cell. In this way, first, the inspection apparatus captures the image of the surface of the battery cell and performs inspection, so that full-automatic gluing inspection is implemented, which reduces costs and improves inspection efficiency compared with manual inspection; second, the picking portion directly removes the faulty battery cell, which reduces the costs and shortens processing time compared with online manual regluing; and finally, the picking portion automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack.

It should be understood that the foregoing general descriptions and the following detailed descriptions are merely illustrative and explanatory, and do not constitute any limitation on this disclosure.

### BRIEF DESCRIPTION OF DRAWINGS

The accompanying drawings herein are incorporated into this specification and form a part of this specification, and these accompanying drawings illustrate the embodiments conforming to this disclosure, and are intended to describe the technical solutions in this disclosure together with this specification.
FIG. 1 is a first schematic flowchart of implementation of a gluing position inspection method according to an embodiment of this disclosure;
FIG. 2 is a first schematic diagram of an image of a surface of a battery cell according to an embodiment of this disclosure;
FIG. 3 is a second schematic diagram of an image of a surface of a battery cell according to an embodiment of this disclosure;
FIG. 4 is a first schematic structural diagram of composition of a gluing position inspection system according to an embodiment of this disclosure;
FIG. 5 is a second schematic structural diagram of composition of a gluing position inspection system according to an embodiment of this disclosure;
FIG. 6 is a second schematic flowchart of implementation of a gluing position inspection method according to an embodiment of this disclosure;
FIG. 7 is a third schematic flowchart of implementation of a gluing position inspection method according to an embodiment of this disclosure;
FIG. 8 is a fourth schematic flowchart of implementation of a gluing position inspection method according to an embodiment of this disclosure;
FIG. 9 is a schematic structural diagram of a gluing position inspection device according to an embodiment of this disclosure;
FIG. 10 is an enlarged view of a position A in FIG. 9;
FIG. 11 is a schematic structural diagram of a storage apparatus according to an embodiment of this disclosure, where the first direction and the second direction are not shown in the figure;
FIG. 12 is a schematic structural diagram of a storage apparatus according to an embodiment of this disclosure, where the first direction and the second direction are shown in the figure;
FIG. 13 is an assembly diagram of a first base, an adjustment baffle plate, a gear, a gear rack and a mounting base according to an embodiment of this disclosure; and
FIG. 14 is a schematic structural diagram of a cache apparatus according to an embodiment of this disclosure.

Reference signs:
inspection device 21; inspection apparatus 211; pick-and-place apparatus 212; picking portion 2121; cache apparatus 213; second base 2131; side baffle plate 2132; second accommodating cavity 2133; storage apparatus 214; first base 41; reference baffle plate 42; subplate 421; adjustment baffle plate 43; drive assembly 44; gear 441; gear rack 442; mounting base 443; driver 444; first accommodating cavity 45; paper peeling apparatus 215; frame 216; conveying apparatus 217; inspection position 3; inspection system 20; and control apparatus 22.

### DESCRIPTION OF EMBODIMENTS

To make purposes, technical solutions, and advantages of this disclosure clearer, this disclosure is further described in detail with reference to drawings. The described embodiments should not be construed as a limitation on this disclosure, and all other embodiments obtained by persons of ordinary skills in the art without creative efforts shall fall within the protection scope of this disclosure.

In the following description, "some embodiments" describe a subset of all possible embodiments, but it can be understood that "some embodiments" may be the same subset or different subsets of all possible embodiments, and may be combined with each other in absence of conflicts.

In the following description, the terms "first/second/third" are only used to differentiate similar objects, and do not represent a specific sequence of the objects. It can be understood that a specific sequence of "first/second/third" can be changed if permitted, so that the embodiments of this disclosure described herein can be implemented in other sequences than those illustrated or described herein.

Unless otherwise defined, all technical and scientific terms used herein shall have the same meanings as commonly understood by persons skilled in the art to which this disclosure belongs. The terms used in this specification are merely intended to describe embodiments of this disclosure, rather than to limit this disclosure.

In the related art, traction batteries are widely used in multiple fields such as energy storage power systems, transportation tools, and aerospace. The traction battery can be a battery cell, a battery module, or a battery pack. The battery can be a secondary battery, and the secondary battery refers to a battery that can still be used by activating its active material through charging after the battery is discharged. In this embodiment of this disclosure, the battery can be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, alead storage battery, or the like. This is not limited in this embodiment of this disclosure. In a battery production process, surfaces of the battery cells need to be glued, so that multiple battery cells can be bound. During the implementation, it is also necessary to inspect a defect of the glued battery cells. In addition, when gluing of battery cells is faulty, online manual handling is usually required, which is time-consuming and costly and affects a production capacity of a production line as well. In addition, omission of regluing is likely to occur during manual gluing, and as a result, the battery cells with faulty glue are grouped as usual, which affects heat dissipation and service life of battery packs.

An embodiment of this disclosure provides a gluing position inspection method. First, an inspection apparatus captures an image of a surface of a battery cell and performs inspection, so that full-automatic gluing inspection is implemented, which reduces costs and improves inspection efficiency compared with manual inspection; second, a picking portion directly removes a faulty battery cell, which reduces the costs and shortens processing time compared with online manual regluing; and finally, the picking portion automatically replaces the faulty battery cell with a spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of a battery pack. The method provided in this embodiment of this disclosure can be performed by the inspection device, and the inspection device can be any suitable type of device applicable to any scenario. In some embodiments, the inspection device also has a control apparatus, and the control apparatus may include, but is not limited to, a programmable logic controller (Programmable Logic Controller, PLC), an upper computer and an intermediate computer.

The following clearly and completely describes the technical solutions in embodiments of this disclosure with reference to the drawings in the embodiments of this disclosure.

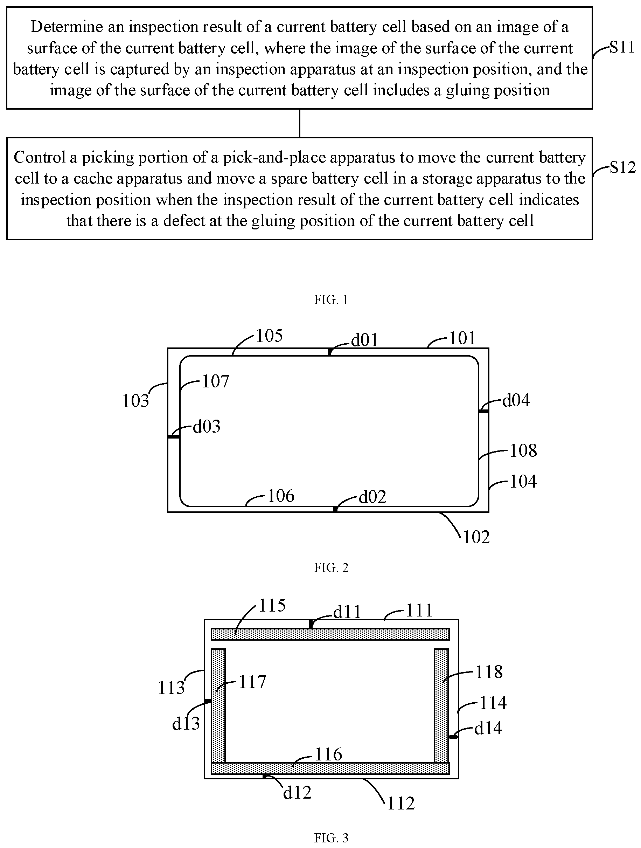

FIG. 1 is a first schematic flowchart of implementation of a gluing position inspection method according to an embodiment of this disclosure. The gluing position inspection method is applied to an inspection device. The inspection device includes an inspection apparatus 211, a pick-and-place apparatus 212, a cache apparatus 213, and a storage apparatus 214. As shown in FIG. 1, the inspection method includes step S11 and step S12:

Step S11: Determine an inspection result of a current battery cell based on an image of a surface of the current battery cell, where the image of the surface of the current battery cell is captured by the inspection apparatus at the inspection position, and the image of the surface of the current battery cell includes a gluing position.

Herein, the current battery cell refers to a battery cell on a conveying line. In some embodiments, the current battery cell is loaded on a tray and flows to an inspection position 3 of the inspection apparatus 211 in a flow direction of the conveying line. The tray can hold at least one battery cell and is suitable for holding different types of battery cells with different sizes. Glue is applied to the surface of the current battery cell. The glue can be any suitable glue that can implement adhesion, for example, a double-sided tape or a rubber strip.

The inspection results may include, but are not limited to, a first inspection result and a second inspection result. The first inspection result indicates that there is no defect at a gluing position of the current battery cell, and the second inspection result indicates that there is a defect at the gluing position of the current battery cell. The defect at the gluing position can be any suitable defect, for example, no gluing, an inaccurate gluing position, and omission of gluing at a specific position.

The inspection apparatus 211 can be any suitable apparatus capable of obtaining the image, for example, an image sensor, a camera, and a webcam. In some embodiments, there may be at least one inspection apparatus 211. During implementation, the number of inspection apparatuses 211 can match the number of battery cells loaded on the tray. For example, two battery cells are loaded on the tray, and therefore, the number of inspection apparatuses can also be two.

The inspection position 3 can be any suitable position. During implementation, the inspection position 3 only needs to be within an inspection range of the inspection apparatus 211. For example, the inspection position is directly below the inspection apparatus 211.

In some embodiments, the step S11 of "determining an inspection result of a current battery cell based on an image of a surface of the current battery cell" includes step S111 and step S112.

Step S111: Identify the image of the surface of the current battery cell to obtain surface rim information and gluing rim information of the current battery cell.

Herein, the image of the surface can be identified by any suitable neural network, model, or the like, to obtain the surface rim information and the gluing rim information.

The surface rim information may include at least one rim, for example, an upper rim, a lower rim, a left rim, and a right rim. In some embodiments, the rim can be a rim in any shape, for example, a straight line.

The gluing rim information may also include at least one gluing rim, for example, an upper gluing rim, a lower gluing rim, a left gluing rim, and a right gluing rim. In some embodiments, the gluing rim can be a rim in any shape, for example, a quadrangle. During implementation, each gluing rim respectively corresponds to one rim in the surface rim information. For example, the upper gluing rim corresponds to the upper rim and the lower gluing rim corresponds to the lower rim.

Step S112: Determine the inspection result of the current battery cell based on the surface rim information and the gluing rim information of the current battery cell.

Herein, the gluing rim information can be compared with target information to determine the inspection result. The target information may include, but is not limited to, surface rim information and standard gluing rim information corresponding to the surface rim information. For example, the surface rim information is directly compared with the gluing rim information. For another example, the gluing rim information is compared with the standard gluing rim information corresponding to the surface rim information.

FIG. 2 is a first schematic diagram of an image of a surface of a battery cell according to an embodiment of this disclosure. As shown in FIG. 2, the image of the surface includes four rims and four gluing rims, each gluing rim is a straight line, the four rims are respectively an upper rim 101, a lower rim 102, a left rim 103, and a right rim 104, and the four gluing rims are respectively an upper gluing rim 105, a lower gluing rim 106, a left gluing rim 107, and a right gluing rim 108.

A distance between the upper rim 101 and the upper gluing rim 105 is d01, where d01 is within the first distance range;
a distance between the lower rim 102 and the lower gluing rim 106 is d02, where d02 is within the second distance range;
a distance between the left rim 103 and the left gluing rim 107 is d03, where d03 is within the third distance range; and
a distance between the right rim 104 and the right gluing rim 108 is d04, where d04 is within the fourth distance range.

Each distance range can be any suitable range. During implementation, the distance ranges can be the same or different. For example, both the first distance range and the second distance range may be 0 mm to 3 mm (Millimeter), and the third distance range and the fourth distance range may be 3 mm to 6 mm.

FIG. 3 is a second schematic diagram of an image of a surface of a battery cell according to an embodiment of this disclosure. As shown in FIG. 3, the image of the surface includes four rims and four gluing rims, each gluing rim is a quadrangle, the four rims are respectively an upper rim 111, a lower rim 112, a left rim 113, and a right rim 114, and the four gluing rims are respectively an upper gluing rim 115, a lower gluing rim 116, a left gluing rim 117, and a right gluing rim 118.

A distance between the upper rim 111 and an upper side of the upper gluing rim 115 is d11, where d11 is within the fifth distance range;
a distance between the lower rim 112 and a lower side of the lower gluing rim 116 is d12, where d12 is within the sixth distance range;
a distance between the left rim 113 and a left side of the left gluing rim 117 is d13, where d13 is within the seventh distance range; and
a distance between the right rim 114 and a right side of the right gluing rim 118 is d14, where d14 is within the eighth distance range.

Each distance range can be any suitable range. During implementation, the distance ranges can be the same or different. For example, the fifth distance range can be 0 mm to 2 mm, and the sixth distance range, the seventh distance range and the eighth distance range can all be 0 mm to 3 mm.

In some embodiments, for non-large-area gluing of a rubber strip and the like, the distance between the lower side of the upper gluing rim 115 and the upper side of the left gluing rim 117 and the distance between the lower side of the upper gluing rim 115 and the upper side of the right gluing rim 118 are both within the ninth distance range. The distance between the upper side of the lower gluing rim 116 and the lower side of the left gluing rim 117 and the distance between the upper side of the lower gluing rim 116 and the lower side of the right gluing rim 118 both meet the tenth distance range. The ninth distance range and the tenth distance range can be any suitable ranges. For example, the ninth distance range can be 0.5 mm to 3 mm and the tenth distance range can be 0 mm to 0.2 mm.

In some embodiments, the surface rim information of the current battery cell includes at least one rim, the gluing rim information of the current battery cell includes at least one gluing rim, and each rim is in a one-to-one correspondence with each gluing rim. The step S112 includes step S1121 and step S1122.

Step S1121: Determine a distance between each rim and a corresponding gluing rim.

Herein, each distance can be a certain distance, weight of the certain distance, a mean, variance, or mean square deviation of multiple distances, or the like. Because the gluing rim and the rim are not necessarily parallel, distances from points on the gluing rim to a corresponding rim are not necessarily the same. In some embodiments, a mean of distances between at least two target points on the gluing rim and the corresponding rim can be used as the distance between the gluing rim and the corresponding rim. The target point can be a suitable point on the gluing rim, for example, a start point, an end point, a midpoint, or the like of the gluing rim.

Step S1122: Determine the inspection result of the current battery cell based on each distance.

Herein, each distance is compared with a corresponding distance range, to determine a corresponding comparison result of each distance, and the inspection result is determined based on each comparison result. The comparison result may include, but is not limited to, the first comparison result, the second comparison result, or the like. The first comparison result indicates that the distance is within the distance range, and the second comparison result indicates that the distance is out of the distance range.

The inspection results may include, but are not limited to, the first inspection result, the second inspection result, and the like. During implementation, methods for determining the inspection result may include, but are not limited to, a certain comparison result, the number of first comparison results, and the number of second comparison results.

For example, if each comparison result is the first comparison result, the first inspection result can be used as the inspection result; or if at least one comparison result is the second comparison result, the second inspection result is used as the inspection result. For another example, if the number of first comparison results is greater than the number of second comparison results, the first inspection result is used as the inspection result. Otherwise, the second inspection result is used as the inspection result.

In some embodiments, step S1122 includes step S131 and/or step S132.

Step S131: Use, as the inspection result of the current battery cell, the first inspection result indicating that there is no defect when each distance is in the corresponding distance range.

Herein, different distances correspond to the same distance range or different distance ranges. In some embodiments, the same distance range or different distance ranges corresponding to the same distance can be set for different battery cells. During implementation, persons skilled in this art can independently set the battery cell, the distance and the corresponding distance range based on an actual need. This is not limited in this embodiment of this disclosure. For example, in FIG. 2, if d01, d02, d03, and d04 are all within the corresponding distance range, the first inspection result is used as the inspection result of the current battery cell.

Step S132: Use, as the inspection result of the current battery cell, the second inspection result indicating that there is a defect when at least one distance is out of the corresponding distance range.

Herein, if a certain distance is out of the corresponding distance range, the second inspection result is used as the inspection result of the current battery cell. For example, in FIG. 2, if d01 is out of the first distance range, the second inspection result is used as the inspection result of the current battery cell.

In this embodiment of this disclosure, each distance is compared with the corresponding distance range to determine whether there is the defect at the gluing position of the battery cell, which shortens inspection duration and also improves accuracy of the inspection result, thereby reducing a misjudgment rate of the defect of the battery cell.

Step S12: Control a picking portion of the pick-and-place apparatus to move the current battery cell to the cache apparatus and move a spare battery cell in the storage apparatus to the inspection position when the inspection result of the current battery cell indicates that there is a defect at the gluing position of the current battery cell.

Herein, the pick-and-place apparatus 212 can be any suitable apparatus capable of implementing functions such as picking and placing of the battery cell, for example, a robot. The pick-and-place apparatus 212 has a picking portion 2121, and the picking portion 2121 is configured to pick and place the battery cell.

The cache apparatus 213 can be any suitable apparatus that can cache the battery cell, for example, a cache tray, and the cache tray can cache multiple battery cells. In some embodiments, the cache tray includes a second base 2131 and multiple side baffle plates 2132, and the multiple side baffle plates 2132 and the second base 2131 are disposed to form at least one second accommodating cavity 2133 for accommodating the battery cell.

The storage apparatus 214 can be any suitable apparatus capable of storing the battery cell, for example, a storage tray, and the storage tray can store multiple spare battery cells. The spare battery cell can be a single battery cell or a battery cell group, the battery cell group includes at least two battery cells, and the at least two battery cells in the battery cell group can be at least two battery cells whose opposite side faces are fitted, or can be at least two battery cells whose opposite side faces are spaced apart by a preset distance. In some embodiments, the cache tray includes a first base 41, a reference baffle plate 42, an adjustment baffle plate 43, a drive assembly 44, and the like. The first base 41, the reference baffle plate 42 and the adjustment baffle plate 43 are disposed to form a first accommodating cavity 45 for accommodating the spare battery cell, and the drive assembly 44 is configured to drive the adjustment baffle plate 43 to move to fix the spare battery cell in the first accommodating cavity 45. In some embodiments, a type of the spare battery cell stored in the cache tray and a type of a to-be-assembled battery module are matched.

During implementation, the picking portion 2121 first picks the current battery cell from the inspection position 3 and moves the current battery cell to the cache apparatus 213, and then picks the spare battery cell from the storage apparatus 214 and moves the spare battery cell to the inspection position 3.

In some embodiments, there may be multiple current battery cells including, for example, the battery cell group formed by the at least two battery cells whose opposite side faces are fitted or the battery cell group formed by the at least two battery cells whose opposite side faces are spaced apart by the preset distance.

In some embodiments, when current battery cells are the battery cell group formed by at least two battery cells whose opposite side faces are spaced apart by the preset distance, if an inspection result of at least one battery cell in the battery cell group indicates that there is a defect at the corresponding gluing position, the picking portion 2121 of the pick-and-place apparatus 212 can be controlled to replace the battery cell group with the spare battery cells, and the spare battery cells are the battery cell group formed by at least two battery cells whose opposite side faces are spaced apart by the preset distance. The picking portion 2121 of the pick-and-place apparatus 212 can also be controlled to sequentially replace at least one defective battery cell with a spare battery cell, and the spare battery cell may be a single battery cell.

In some embodiments, when current battery cells are the battery cell group formed by at least two battery cells whose opposite side faces are fitted, if an inspection result of at least one battery cell in the battery cell group indicates that there is a defect at the corresponding gluing position, the picking portion 2121 of the pick-and-place apparatus 212 can be controlled to replace the battery cell group with the spare battery cells, and the spare battery cells are the battery cell group formed by at least two battery cells whose opposite side faces are fitted.

In this embodiment of this disclosure, first, the inspection apparatus captures the image of the surface of the battery cell and performs inspection, so that full-automatic gluing inspection is implemented, which reduces costs and improves inspection efficiency compared with manual inspection; second, the picking portion directly removes the faulty battery cell, which reduces the costs and shortens processing time compared with online manual regluing; and finally, the picking portion automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack.

In some embodiments, the inspection method further includes step S13.

Step S13: Convey the current battery cell to a next set position when the inspection result of the current battery cell indicates that there is no defect at the gluing position of the current battery cell.

Herein, the next set position can be any suitable position, and during implementation, the next set position can be a certain position in a next process (for example, stacking) after gluing. In this way, if there is no defect at the gluing position of the current battery cell, the current battery cell is sent to a next workstation.

In some embodiments, the inspection method further includes step S14 and step S15.

Step S14: Determine an inspection result of the spare battery cell based on an image of a surface of the spare battery cell.

Herein, the inspection apparatus 211 first captures the image of the surface of the spare battery cell, and the image of the surface includes at least the gluing position on the surface of the spare battery cell. During implementation, the spare battery cell can be used as the next current battery cell. Determining of the inspection result of the spare battery cell is similar to determining of the inspection result of the current battery cell in the foregoing step S11. During implementation, reference can be made to the specific implementation of the foregoing step S11.

Step S15: Control a picking portion of the pick-and-place apparatus to move the spare battery cell to the cache apparatus and move a next spare battery cell in the storage apparatus to the inspection position when the inspection result of the spare battery cell indicates that there is a defect at a gluing position of the spare battery cell.

Herein, if the spare battery cell is defective, the spare battery cell is moved to the cache apparatus 213, and the next spare battery cell is picked from the storage apparatus 214 and moved to the inspection position 3. During implementation, an operation process of the picking portion 2121 of the pick-and-place apparatus 212 is similar to the foregoing step S12. During implementation, reference can be made to the specific implementation of the foregoing step S12.

In these embodiments of this disclosure, the spare battery cell is inspected again, to ensure that there is no defect at the gluing position of the battery cell flowing in, thereby reducing a possibility of grouping the battery cell with faulty glue as usual.

In some embodiments, the inspection method further includes step S16 and step S17.

Step S16: Obtain the number of battery cells in the target apparatus.

Herein, the target apparatus includes at least one of the following: the cache apparatus 213 and the storage apparatus 214. During implementation, the cache apparatus 213 can cache at least one battery cell, and the storage apparatus 214 can store at least one spare battery cell.

A manner of obtaining the number of battery cells in the target apparatus can be any suitable manner. For example, the battery cells in the target apparatus are counted by using a counter. For another example, the number of battery cells in the cache apparatus can be obtained by identifying the image including the target apparatus.

Step S17: Generate and output prompt information corresponding to the target apparatus when the number of battery cells in the target apparatus meets a preset condition.

Herein, different target apparatuses correspond to different preset conditions. For example, for the cache apparatus 213, the preset condition may be "no less than the first threshold"; and for the storage apparatus 214, the preset condition may be "no greater than the second threshold". The first threshold and the second threshold can be any suitable thresholds, and the first threshold can be different from the second threshold during implementation. For example, the first threshold may be determined based on the maximum number of caches in the cache apparatus, and the second threshold may be 1. For example, if the maximum number of caches in the cache apparatus is 8, the first threshold can be 6, 7, or the like.

Different target apparatuses correspond to different prompt information. The prompt information can be any suitable information. For example, for the cache apparatus 213, the prompt information may be "the cache space is about to be full, please handle it"; and for the storage apparatus 214, the prompt information may be "there will be no storage space shortly, please handle it without delay". During implementation, the prompt information can be output in any suitable manner, for example, a display device or voice output.

In these embodiments of this disclosure, the number of battery cells in the cache apparatus and/or the storage apparatus is monitored, and a corresponding prompt is provided when a condition is met, so that staff can handle a problem in a timely manner, thereby ensuring normal storage and replacement of the next faulty battery cell and further ensuring that the production line is not stopped when gluing of the battery cell is faulty.

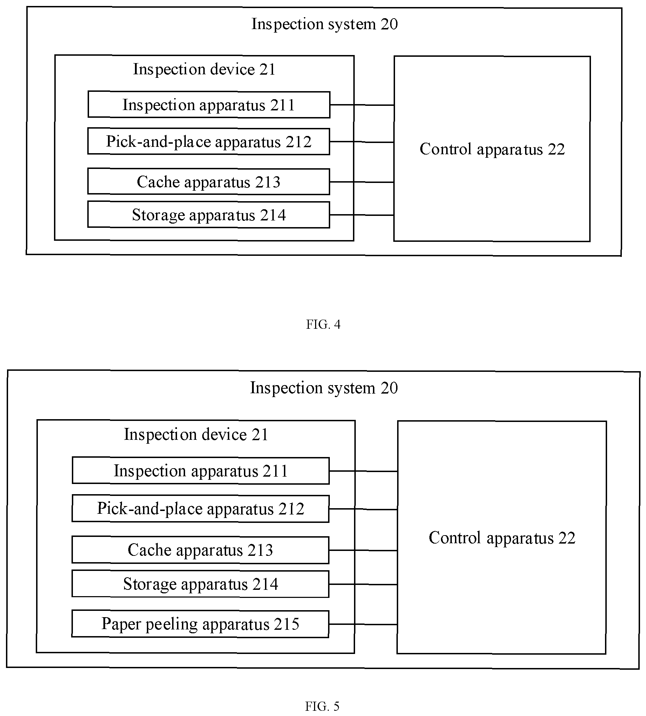

Based on the foregoing embodiments, an embodiment of this disclosure also provides a gluing position inspection system. FIG. 4 is a first schematic structural diagram of composition of a gluing position inspection system according to an embodiment of this disclosure. As shown in FIG. 4, the inspection system 20 includes an inspection device 21 and a control apparatus 22. The inspection device 21 includes an inspection apparatus 211, a pick-and-place apparatus 212, a cache apparatus 213 and a storage apparatus 214.

The inspection apparatus 211 is configured to capture an image of a surface of a current battery cell at an inspection position 3, where the image of the surface includes a gluing position.

The control apparatus 22 is configured to: determine an inspection result of the current battery cell based on the image of the surface of the current battery cell; and generate a control instruction and send the control instruction to the pick-and-place apparatus 212 when the inspection result of the current battery cell indicates that there is a defect at the gluing position of the current battery cell.

The pick-and-place apparatus 212 is configured to: move the current battery cell to the cache apparatus 213 and move the spare battery cell in the storage apparatus 214 to the inspection position 3 by using a picking portion 2121 based on the control instruction.

Herein, the inspection apparatus 211 can be any suitable apparatus capable of obtaining the image, for example, a camera. During implementation, the number of inspection apparatuses 211 matches the number of battery cells laid on the tray.

The control apparatus 22 can be any suitable apparatus that can implement a control function, for example, a PLC. In some embodiments, the control apparatus 22 can also be integrated into the inspection device 21. During implementation, the control apparatus 22 is communicatively connected to the inspection apparatus 211, and the control apparatus 22 can read the image of the surface from the inspection apparatus 211 or the inspection apparatus 211 can send the image of the surface to the control apparatus 22. For determining of the inspection result of the current battery cell by the control apparatus 22, reference can be made to the specific implementation of the foregoing step S11.

The control instruction may be any suitable instruction. During implementation, the control instruction is used to replace the current battery cell at the inspection position 3 with the spare battery cell in the storage apparatus 214.

In some embodiments, the control apparatus 22 is further configured to send a capturing instruction to the inspection apparatus 211; and the inspection apparatus 211 is configured to capture an image of a surface of the current battery cell based on the capturing instruction.

Herein, the capturing instruction can be any suitable instruction, and during implementation, the capturing instruction is used to capture the image of the surface of the current battery cell at the inspection position 3. The current battery cell can be a spare battery cell or a battery cell transmitted by a conveying line. In this way, the image is captured based on the capturing instruction, and compared with real-time capturing, the number of capturing times is reduced and hardware consumption is lowered.

The pick-and-place apparatus 212 can be any suitable apparatus capable of implementing functions such as picking and placing of the battery cell, for example, a robot. The pick-and-place apparatus has a picking portion 2121, and the picking portion 2121 is configured to pick and place the battery cell. During implementation, the pick-and-place apparatus 212 is communicatively connected to the control apparatus 22.

The cache apparatus 213 can be any suitable apparatus that can cache the battery cell, for example, a cache tray, and the cache tray can cache multiple battery cells. In some embodiments, the cache tray includes a second base 2131 and multiple side baffle plates 2132, and the multiple side baffle plates 2132 and the second base 2131 are disposed to form at least one second accommodating cavity 2133 for accommodating the battery cell.

The storage apparatus 214 can be any suitable apparatus capable of storing the battery cell, for example, a storage tray, and the storage tray can store multiple spare battery cells. In some embodiments, the storage tray includes a first base 41, a reference baffle plate 42, an adjustment baffle plate 43, a drive assembly 44, and the like. The first base 41, the reference baffle plate 42 and the adjustment baffle plate 43 are disposed to form a first accommodating cavity 45 for accommodating the spare battery cell, and the drive assembly 44 is configured to drive the adjustment baffle plate 43 to move to fix the spare battery cell in the first accommodating cavity 45.

During implementation, for an operation process of the picking portion 2121, reference can be made to the specific implementation of the foregoing step S12.

In some embodiments, the inspection apparatus 211 is further configured to capture an image of a surface of the spare battery cell at the inspection position 3; and the control apparatus 22 is further configured to: determine an inspection result of the spare battery cell based on the image of the surface of the spare battery cell; and generate a control instruction and send the control instruction to the pick-and-place apparatus 212 when the inspection result of the spare battery cell indicates that there is a defect at a gluing position of the spare battery cell, so that the pick-and-place apparatus 212 moves the spare battery cell to the cache apparatus 213 and moves a next spare battery cell in the storage apparatus 214 to the inspection position 3 by using the picking portion 2121.

Herein, the control apparatus 22 can first send a capturing instruction to the inspection apparatus 211, so that the inspection apparatus 211 captures the image of the surface of the spare battery cell. During implementation, for the inspection result of the spare battery cell, reference can be made to the specific implementation of the foregoing step S14. For an operation process of the picking portion 2121, reference can be made to the specific implementation of the foregoing step S15. In this way, the image of the surface of the spare battery cell is captured, so that the spare battery cell is inspected again, to ensure that there is no defect at the gluing position of the battery cell flowing into the production line, thereby reducing a possibility of grouping the battery cell with faulty glue as usual.

In some embodiments, the inspection device 21 further includes a paper peeling apparatus 215; the control apparatus 22 is further configured to send a paper peeling instruction to the paper peeling apparatus 215; and the paper peeling apparatus 215 is configured to peel release paper off the surface of the current battery cell based on the paper peeling instruction, to expose the gluing position of the current battery cell.

Herein, the paper peeling apparatus 215 can be any suitable apparatus that can implement a function of peeling off the release paper. The paper peeling instruction can be any suitable instruction, and the paper peeling instruction is used to peel the release paper off the surface of the battery cell. During implementation, the paper peeling apparatus 215 is communicatively connected to the control apparatus 22. In some embodiments, when the battery cell flows to the inspection device 21, the battery cell is first moved to a position corresponding to the paper peeling apparatus 215, to peel the release paper off the surface of the battery cell and expose the gluing position; and then, the battery cell with the release paper peeled off is moved to the inspection position 3, to control the inspection apparatus 211 to capture the image of the surface of the battery cell at the inspection position 3, thereby obtaining the inspection result of the battery cell. In this way, the paper peeling apparatus is integrated into the inspection device, to implement multiple processes of peeling off the release paper, inspecting gluing, automatically replacing a faulty battery cell, and the like on the same device, thereby reducing costs of the device and expanding an application scenario of the device.

FIG. 5 is a second schematic structural diagram of composition of a gluing position inspection system according to an embodiment of this disclosure. As shown in FIG. 5, the inspection system 20 includes an inspection device 21 and a control apparatus 22. The inspection device 21 includes an inspection apparatus 211, a pick-and-place apparatus 212, a cache apparatus 213, a storage apparatus 214 and a paper peeling apparatus 215.

The control apparatus 22 sends a paper peeling instruction to the paper peeling apparatus 215, so that the paper peeling apparatus 215 peels the release paper off the surface of the current battery cell.

The control apparatus 22 sends a capturing instruction to the inspection apparatus 211, so that the inspection apparatus 211 captures the image of the surface of the current battery cell at the inspection position 3.

The control apparatus 22 determines the inspection result of the current battery cell based on the image of the surface, and sends a control instruction to the pick-and-place apparatus 212 if the inspection result indicates that there is a defect at the gluing position of the current battery cell.

Based on the control instruction, the pick-and-place apparatus 212 moves the current battery cell at the inspection position 3 to the cache apparatus 213, and grabs the spare battery cell from the storage apparatus 214 to move to the inspection position 3.

During implementation, the control apparatus 22 also needs to inspect the spare battery cell at the inspection position 3, and if the inspection result of the spare battery cell indicates that there is no defect at the gluing position of the spare battery cell, the spare battery cell is conveyed to a stacking workstation. On the contrary, if the inspection result of the spare battery cell indicates that there is a defect at the gluing position of the spare battery cell, the spare battery cell is replaced with a next spare battery cell until the battery cell at the inspection position 3 has no defect.

In some embodiments, the inspection system 20 further includes a prompt apparatus; and the control apparatus 22 is further configured to perform at least one of the following: obtaining a first number of battery cells in the cache apparatus 213, generating first prompt information when the first number is not less than a first threshold, and sending the first prompt information to the prompt apparatus, so that the prompt apparatus outputs the first prompt information; and obtaining a second number of spare battery cells in the storage apparatus 214, generating second prompt information when the second number is not greater than a second threshold, and sending the second prompt information to the prompt apparatus, so that the prompt apparatus outputs the second prompt information.

Herein, the prompt apparatus can be any suitable apparatus that can implement a prompt function, for example, a display apparatus or a voice apparatus. During implementation, the prompt apparatus is communicatively connected to the control apparatus 22.

A manner of obtaining the first/second number can be any suitable manner. For example, the battery cells in the cache apparatus or storage apparatus are counted by using a counter. For another example, the image including the cache apparatus or storage apparatus is identified, to obtain the number of battery cells in the cache apparatus or storage apparatus.

The first threshold and the second threshold can be any suitable thresholds, and the first threshold can be different from the second threshold during implementation.

The first prompt information and the second prompt information may be any suitable prompt information, and the first prompt information may be different from the second prompt information during implementation. In some embodiments, the first/second prompt information may be preset prompt information or prompt information generated based on the first/second number. For example, the first prompt information may be "there will be no storage space left soon, please handle it without delay", or the first prompt information may be "there are only X battery cell positions left by now, please handle it first".

In this way, on the one hand, a prompt apparatus is also integrated into the inspection system, which expands application scenarios of the system. On the other hand, the number of battery cells in the cache apparatus and/or the storage apparatus is monitored in real time, and a corresponding prompt is provided, so that staff can handle a problem in a timely manner, thereby ensuring normal storage and replacement of the next faulty battery cell and further ensuring that the production line is not stopped when gluing of the battery cell is faulty.

In some embodiments, the control apparatus 22 is further configured to: obtain information of the current battery cell; and generate an adjustment instruction and send the adjustment instruction to the pick-and-place apparatus 212 when the information of the current battery cell is different from information of a previous battery cell; and the pick-and-place apparatus 212 is further configured to update a working parameter of the picking portion 2121 based on the adjustment instruction.

Herein, a manner of obtaining the information of the current battery cell can be any suitable manner. For example, the information of the current battery cell can be obtained by scanning a barcode/QR code or the like on the current battery cell. For another example, the information of the current battery cell can be obtained by obtaining an identifier on a tray holding the battery cell.

The adjustment instruction can be any suitable instruction. During implementation, the adjustment instruction is used to adjust the working parameter of the picking portion 2121, so that the picking portion 2121 can pick the current battery cell. During implementation, the adjustment instruction may or may not include a new working parameter. The working parameter may include, but is not limited to, a gap or a position, so that the picking portion 2121 can grab a battery cell with a corresponding size. In this way, on the one hand, two adjacent battery cells are compared, to quickly determine whether it is necessary to change the model. On the other hand, the working parameter of the picking portion 2121 is adjusted to compatibly grab battery cells with different sizes, which improves universality and adaptability of the inspection device and can meet a production requirement of a highly flexible battery.

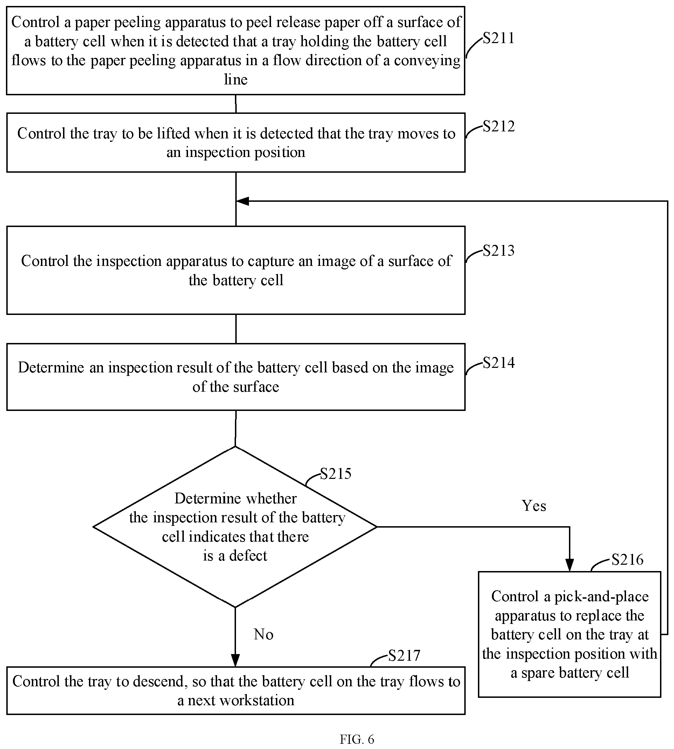

FIG. 6 is a second schematic flowchart of implementation of a gluing position inspection method according to an embodiment of this disclosure. As shown in FIG. 6, the inspection method includes step S211 to step S217.

Step S211: Control a paper peeling apparatus to peel the release paper off a surface of a battery cell when it is detected that a tray holding the battery cell flows to the paper peeling apparatus in a flow direction of a conveying line.

Step S212: Control the tray to be lifted when it is detected that the tray moves to an inspection position.

Herein, the inspection device further includes a lifting apparatus, and the lifting apparatus is configured to lift the tray at the inspection position 3 or lay the lifted tray down. During implementation, the lifting apparatus can be any suitable apparatus that can implement a lifting function.

Step S213: Control the inspection apparatus to capture an image of a surface of the battery cell.

Step S214: Determine an inspection result of the battery cell based on the image of the surface.

Step S215: Determine whether the inspection result of the battery cell indicates that there is a defect, if yes, proceed to step S216, or otherwise, proceed to step S217.

Step S216: Control the pick-and-place apparatus to replace the battery cell on the tray at the inspection position with a spare battery cell, and proceed to step S213.

Step S217: Control the tray to descend, so that the battery cell on the tray flows to a next workstation.

In this embodiment of this disclosure, first, the inspection apparatus captures the image of the surface of the battery cell and performs inspection, so that full-automatic gluing inspection is implemented, which reduces costs and improves inspection efficiency compared with manual inspection; second, the picking portion 2121 directly removes the faulty battery cell, which reduces the costs and shortens processing time compared with online manual regluing; then, the picking portion 2121 automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack; and finally, the system implements multiple processes of peeling off the release paper, inspecting gluing, replacing a faulty battery cell, and the like, thereby reducing costs and expanding an application scenario of the system.

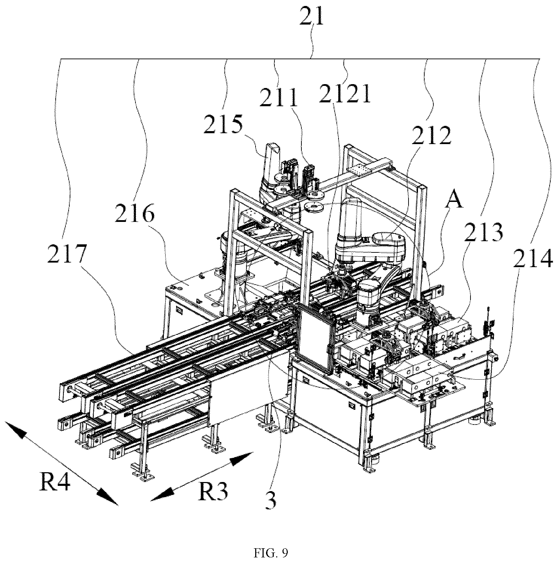

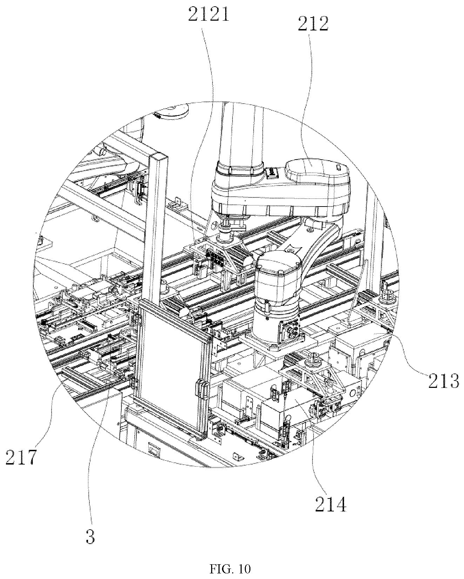

FIG. 9 is a schematic structural diagram of a gluing position inspection device 21 according to an embodiment of this disclosure. FIG. 9 and FIG. 10 show the gluing position inspection device 21 in this embodiment of this disclosure. The inspection device 21 includes a frame 216, an inspection apparatus 211, a storage apparatus 214, a cache apparatus 213 and a pick-and-place apparatus 212. The inspection apparatus 211 is disposed on the frame 216, where the inspection apparatus 211 is configured to capture an image of a surface of a battery cell at an inspection position 3. The storage apparatus 214 is disposed on the frame 216, where the storage apparatus 214 is configured to store at least one spare battery cell. The cache apparatus 213 is disposed on the frame 216 and configured to cache at least one defective battery cell. The pick-and-place apparatus 212 is disposed on the frame 216, where the pick-and-place apparatus 212 has a picking portion 2121 for picking and placing the battery cell, and the picking portion 2121 can reciprocate among the inspection position 3, the storage apparatus 214, and the cache apparatus 213.

Exemplarily, the inspection apparatus 211 is configured to capture the image of the surface of the battery cell at the inspection position 3. During implementation, it can be inspected, based on the image of the surface of the battery cell, whether the gluing position of the battery cell meets a requirement. When the gluing position of the battery cell meets the requirement, the battery cell has no defect. When the gluing position of the battery cell does not meet the requirement, the battery cell has the defect.

Exemplarily, the spare battery cell can be a battery cell that is glued to meet the requirement to the greatest extent.

Exemplarily, the spare battery cell can be a battery cell obtained after a defective battery cell is amended. For example, the operator takes out the defective battery cell in the cache apparatus 213, amends the defective battery cell to eliminate the defect to the greatest extent, and puts the amended battery cell into the storage apparatus 214.

Exemplarily, the defective battery cells in the cache apparatus 213 mainly come from the pick-and-place apparatus 212.

In this embodiment of this disclosure, the picking portion 2121 directly removes the faulty battery cell, which reduces the costs and also shortens the processing time compared with online manual regluing. The picking portion 2121 automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack. The inspection apparatus 211 captures the image to automatically inspect the battery cell, so that a degree of manual intervention is reduced, which reduces the costs and improves the inspection efficiency compared with manual inspection. The pick-and-place apparatus 212 replaces the defective battery cell with the spare battery cell, which requires no participation of an operator in a replacement process, thereby facilitating a reduction in labor costs. The inspection apparatus 211 inspects the battery cell at the inspection position 3. Because the picking portion 2121 can reciprocate among the inspection position 3, the storage apparatus 214, and the cache apparatus 213, when the inspection result of the battery cell indicates that there is a defect, the picking portion 2121 of the pick-and-place apparatus 212 can move to the inspection position 3 to pick the defective battery cell, and the picking portion 2121 that has picked the defective battery cell moves to the cache apparatus 213, to transfer the defective battery cell at the inspection position 3 to the cache apparatus 213. After the picking portion 2121 releases the defective battery cell to the cache apparatus 213, the picking portion 2121 picks the spare battery cell from the storage apparatus 214 and transfers the spare battery cell to the inspection position 3. The picking portion 2121 can reciprocate among the inspection position 3, the storage apparatus 214, and the cache apparatus 213, which can remove the defective battery cell and also resupply the spare battery cell to the inspection position 3, to implement automatic operation of the device while improving gluing quality of the battery cell, thereby avoiding shutdown to the greatest extent when the battery cell at the inspection position 3 has a defect.

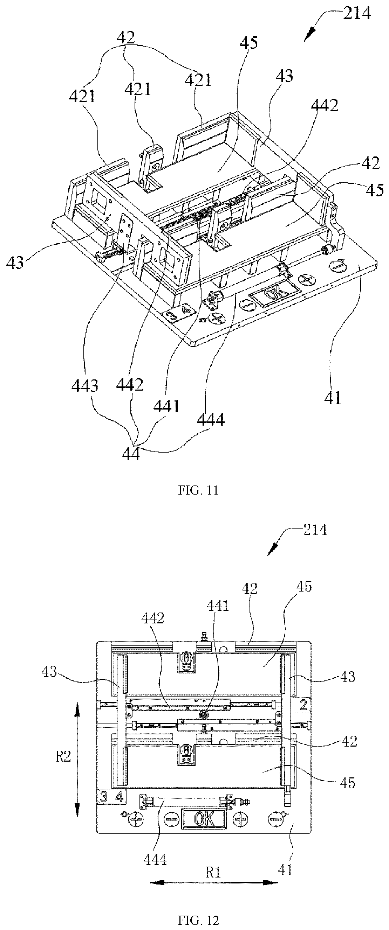

FIG. 11 to FIG. 13 show a structure of the storage apparatus 214 in this disclosure. In an embodiment, as shown in FIG. 11 to FIG. 13, the storage apparatus 214 includes a first base 41, a reference baffle plate 42, an adjustment baffle plate 43, and a drive assembly 44. The reference baffle plate 42 is connected to the first base 41. The first accommodating cavity 45 for accommodating the battery cell is enclosed by the adjustment baffle plate 43, the first base 41, and the reference baffle plate 42. The drive assembly 44 is disposed on the first base 41, and the drive assembly 44 is configured to drive the adjustment baffle plate 43 to move, to position the battery cell in the first accommodating cavity 45.

The first base 41 is a main structure for holding the battery cell, and the spare battery cell is placed on the first base 41.

The reference baffle plate 42 is a positioning reference of the battery cell placed on the first base 41, and the spare battery cell placed on the first base 41 is positioned jointly by the adjustment baffle plate 43 and the reference baffle plate 42 by using the reference baffle plate 42 as the positioning reference.

In this embodiment of this disclosure, the battery cell is placed to but again the first base 41 and the reference baffle plate 42, and the spare battery cell on the first base 41 is clamped and positioned by the adjustment baffle plate 43, to complete positioning of the spare battery cell on the first base 41, and the spare battery cell is clamped by the adjustment baffle plate 43 to stay at the intended position, so that the picking portion 2121 of the pick-and-place apparatus 212 easily picks the spare battery cell on the first base 41. In addition, the adjustment baffle plate 43 is adjusted, which can better adaptively clamp and position spare battery cells with different sizes.

It can be understood that the storage apparatus 214 in this embodiment of this disclosure is not limited to a structure for positioning the spare battery cell. Storage apparatuses 214 capable of accommodating the spare battery cell all fall within the protection scope of this disclosure. Exemplarily, the storage apparatus 214 may be a container capable of accommodating the spare battery cell.

In an embodiment, as shown in FIG. 11 to FIG. 13, adjustment baffle plates 43 are disposed at two ends of the first accommodating cavity 45 in the first direction, and the drive assembly 44 is configured to drive the adjustment baffle plates 43 at both the ends to approach or leave each other in the first direction.

Exemplarily, as shown in FIG. 11 and FIG. 12, the adjustment baffle plates at both the ends clamp and position the spare battery cell in a first direction, and the reference baffle plate 42 abuts against and positions the spare battery cell in a second direction, and the second direction intersects with the first direction.

In this embodiment of this disclosure, the adjustment baffle plates 43 at the two ends are arranged in the first direction, and the drive assembly 44 drives the adjustment baffle plates 43 at the two ends to approach or leave each other in the first direction, so that offset of the adjustment baffle plates 43 at the two ends relative to a position at equal distances from the adjustment baffle plates 43 at the two ends is reduced to the greatest extent, which facilitates centering and positioning of the spare battery cell in the first direction and smooth picking of the spare battery cell adjacent to a central position of the spare battery cell in the first direction by the picking portion 2121 of the pick-and-place apparatus 212 to the greatest extent. In addition, because the adjustment baffle plates at the two ends approach or leave each other in the first direction, positions of the spare battery cells with different sizes at the adjustment baffle plates for positioning the spare battery cells at the two ends change, the reference baffle plate 42 connected to the first base 41 cannot be used as the positioning reference of the spare battery cell in the first direction, a direction in which the reference baffle plate 42 positions and abuts against the spare battery cell needs to intersect with the first direction, the first base 41 holds the spare battery cell, and the reference baffle plate 42 and the adjustment baffle plates 43 at the two ends position the spare battery cell in two different directions respectively, thereby implementing full positioning of the spare battery cell on the first base 41.

It can be understood that, for the storage apparatus 214 in this embodiment of this disclosure, a manner of implementing centering and positioning is not limited to a manner of controlling the adjustment baffle plates 43 at the two ends to approach or leave each other. Exemplarily, the reference baffle plate 42 can be L-shaped. The reference baffle plate 42 stretches in the first direction and the second direction. The adjustment baffle plate 43 and the reference baffle plate 42 clamp and position the spare battery cell in the first direction, and the reference baffle plate 42 abuts against and positions the spare battery cell in the second direction.

In an embodiment, as shown in FIG. 11 to FIG. 13, the drive assembly 44 includes a gear 441, gear racks 442, a mounting bases 443, and a driver 444. A rotation center of a projection zone of the gear 441 projected in an axial direction of the gear 441 is fixed relative to a position of a projection zone of the first base 41. The gear racks 442 are meshed with the gear 441, and the gear racks 442 are disposed on both opposite sides of the gear 441 in a radial direction of the gear 441. A gear rack 442 on each side is correspondingly provided with the mounting base 443, and the mounting bases 443 are respectively connected to a corresponding gear rack 442 and a corresponding adjustment baffle plate 43.

The position of the rotation center of the projection zone of the gear 441 is fixed relative to the projection zone of the first base 41, and the gear 441 rotates relative to the first base 41, but the position of the rotation center of the gear 441 remains basically unchanged.

Exemplarily, the driver 444 may be a telescopic air cylinder, a telescopic oil cylinder or an electric telescopic rod.

In this embodiment of this disclosure, the driver 444 is configured to provide drive forces for transmission of the gears 441 and gear racks 442, so that the gears 441 and gear racks 442 meshed with each other move relatively. Because the position of the rotation center of the gear 441 remains basically unchanged, the gear racks 442 that are disposed on two opposite sides in a radial direction of the gear 441 and that are meshed with the gear 441 approach or leave each other in an extension direction of the gear racks 442 when the gear 441 rotates, and both the gear racks 442 on the two sides move relative to the rotation center of the gear 441, to drive the corresponding mounting bases 443 and the adjustment baffle plates at the two ends to jointly approach and leave each other relative to the rotation center of the gear 441, thereby adaptively clamping and positioning the spare battery cells with different sizes.

It can be understood that, in this embodiment of this disclosure, a manner of driving the adjustment baffle plates at the two ends to approach and leave each other is not limited to a manner of using a structure with the gear 441 and the gear rack 442 that are meshed. Exemplarily, the adjustment baffle plates at the two ends may be driven to approach or leave each other through a screw set with screw threads rotated in opposite directions at two ends.

In an embodiment, as shown in FIG. 11 and FIG. 12, the driver 444 is located on a side, facing toward the first accommodating cavity 45, of the first base 41, and the adjustment baffle plate 43 on one end is disposed on the driver 444, so that the driver 444 drives the adjustment baffle plate 43 to move; and the driver 444 is located at one end, facing away from the reference baffle plate 42 in the second direction, of the adjustment baffle plate 43, the second direction intersects with the first direction, and the gear 441 and the gear rack 442 are both located between the reference baffle plate 42 and the driver 444 in the second direction.

In this embodiment of this disclosure, the driver 444 is located on the side, facing toward the first accommodating cavity 45, of the first base 41, to reduce a structure hindering installation of the first base 41 on the side, facing away from the first accommodating cavity 45, of the first base 41 to the greatest extent, so that the side, facing away from the first accommodating cavity 45, of the first base 41 can get closer to the frame 216 to be firmly installed, thereby alleviating a dangling degree of the side, facing away from the first accommodating cavity 45, of the first base 41. Because the driver 444 is located at the end, facing away from the reference baffle plate 42 in the second direction, of the adjustment baffle plate 43, the gear 441 and the gear rack 442 are both located between the reference baffle plate 42 and the driver 444 in the second direction, and the driver 444 located on the side, facing toward the first accommodating cavity 45, of the first base 41 better avoids positions of the gear rack 442, the gear 441, and the reference baffle plate 42, thereby reducing a possibility of interference between the driver 444 and the gear 441, and interference between the gear rack 442 and the reference baffle plate 42. The driver 444 drives the adjustment baffle plate 43 at one end to move, to drive the corresponding mounting base 443 and the gear rack 442 on the corresponding side to move, the moving gear rack 442 drives the meshed gear 441 to rotate, and the rotating gear 441 drives the gear rack 442 on the other side to move, to drive the adjustment baffle plate 43 at the other end, the corresponding mounting base 443, and the gear rack 442 to move, thereby driving the adjustment baffle plates at the two ends to approach or leave each other.

It can be understood that the position of the driver 444 in this embodiment of this disclosure is not limited. Exemplarily, the driver 444 may be located on a side, facing away from the first accommodating cavity 45, of the first base 41. Exemplarily, the driver 444 may be above the gear 441. The gear 441 and the gear rack 442 may be located on a side, facing away from the driver 444, of the reference baffle plate 42.

It can be understood that a function of the driver 444 in this embodiment of this disclosure is not limited to a function of driving the adjustment baffle plate 43 to move. Exemplarily, the gear 441 is disposed on the driver 444, and the driver 444 can be configured to drive the gear 441 to rotate.

In an embodiment, as shown in FIG. 11 and FIG. 12, there are multiple reference baffle plates 42, the multiple reference baffle plates 42 are arranged at intervals in the second direction, and the second direction intersects with the first direction.

In this embodiment of this disclosure, the multiple reference baffle plates 42 arranged at intervals in the second direction can respectively position and abut against multiple spare battery cells arranged in the second direction, and the multiple spare battery cells arranged in the second direction are all clamped and positioned in the first direction by using the adjustment baffle plates 43 at the two ends. Therefore, the multiple reference baffle plates 42 are arranged at intervals in the second direction, which facilitates positioning of the multiple spare battery cells on the first base 41, so that the multiple spare battery cells can be placed on the first base 41 to be picked by the picking portion 2121 of the pick-and-place apparatus 212.

It can be understood that the number of reference baffle plates 42 is not limited to more than one Exemplarily, the number of reference baffle plates 42 may be one.

In an embodiment, the reference baffle plate 42 includes multiple subplates 421, and the multiple subplates 421 are sequentially arranged at intervals in the first direction.

Exemplarily, the picking portion 2121 of the pick-and-place apparatus 212 can be a gripper, and a gap between two adjacent subplates 421 in the first direction is passable for the gripper to grab the spare battery cell.

Exemplarily, as shown in FIG. 11 and FIG. 12, each reference baffle plate 42 includes three subplates 421, and the three subplates 421 are sequentially arranged at intervals in the first direction.

In this embodiment of this disclosure, the multiple subplates 421 are used as positioning references of the spare battery cell, a height of the subplate 421 can be set according to an actual positioning requirement, the gap between the two adjacent subplates 421 in the first direction is passable for the picking portion 2121 of the pick-and-place apparatus 212 to grab the spare battery cell, and the subplate 421 with the height does not prevent the picking portion 2121 of the pick-and-place apparatus 212 from picking the battery cell. The multiple subplates 421 are arranged at intervals in the first direction, so that the spare battery cell can be better positioned and picked by the picking portion 2121.

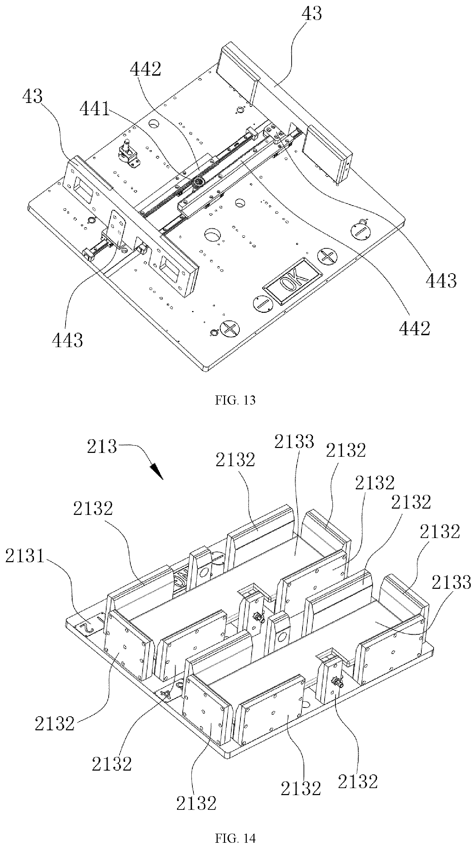

FIG. 14 shows a structure of a cache apparatus 213 in this disclosure. In an embodiment, as shown in FIG. 14, the cache apparatus 213 includes a second base 2131 and a side baffle plate 2132. The side baffle plate 2132 is connected to the second base 2131, there are multiple side baffle plates 2132, at least one second accommodating cavity 2133 for accommodating the battery cell is enclosed by the multiple side baffle plates 2132 and the second base 2131, and multiple side baffle plates corresponding to each second accommodating cavity 2133 are arranged at intervals in a circumferential direction of the second accommodating cavity 2133.

In this embodiment of this disclosure, the second base 2131 and multiple side baffle plates 2132 are arranged at intervals in a circumferential direction to form the second accommodating cavity 2133, and a possibility that the defective battery cell in the second accommodating cavity 2133 detaches from a side of the second accommodating cavity 2133 is reduced due to blocking of the side baffle plates 2132. The height of the side baffle plates 2132 can be set based on a need to prevent the defective battery cell from detaching from the second accommodating cavity 2133, and the gap between two adjacent side baffle plates 2132 is passable for the picking portion 2121 of the pick-and-place apparatus 212, to smoothly place the defective battery cell picked by the picking portion 2121 into the second accommodating cavity 2133.

In an embodiment, as shown in FIG. 9, the inspection device 21 further includes a conveying apparatus 217, the conveying apparatus 217 is configured to convey the battery cell to the inspection position 3, a direction in which the conveying apparatus 217 conveys the battery cell is a third direction, and a direction intersecting with the third direction is a fourth direction.

The conveying apparatus 217 is configured to convey the battery cell to the inspection position 3. The position of the battery cell is variable, and the battery cell is subjected to different processing at different positions. After the battery cell is glued at an upstream position of the inspection position 3, the battery cell pasted with a glue tape is conveyed to the inspection position 3 by the conveying apparatus 217.

Exemplarily, the conveying apparatus 217 may be a belt conveyor.

In this embodiment of this disclosure, the conveying apparatus 217 conveys the battery cell to the inspection position 3 for inspection. After the battery cell at the inspection position 3 is processed, the conveying apparatus 217 can convey the battery cell at the inspection position 3 to a next set position, and a next to-be-inspected battery cell can be placed at the vacated inspection position 3 for inspection.

In an embodiment, as shown in FIG. 9, the inspection device 21 further includes a paper peeling apparatus 215, the paper peeling apparatus 215 is configured to peel release paper off a glue tape of the battery cell at the inspection position 3, where the paper peeling apparatus 215 is located on one side of the conveying apparatus 217 in the fourth direction, the pick-and-place apparatus 212 is located on the other side of the conveying apparatus 217 in the fourth direction, and the storage apparatus 214 and the cache apparatus 213 are both located on one side, facing away from the paper peeling apparatus 215 in the fourth direction, of the pick-and-place apparatus 212.

A specific manner of peeling off the release paper by the paper peeling apparatus 215 is not limited. Exemplarily, the paper peeling apparatus 215 can move while clamping the release paper, to peel the release paper off the glue tape.

In this embodiment of this disclosure, the paper peeling apparatus 215 is located on one side of the conveying apparatus 217 in the fourth direction, the pick-and-place apparatus 212 is located on the other side of the conveying apparatus 217 in the fourth direction, so that positions of the paper peeling apparatus 215 and the pick-and-place apparatus 212 avoid the battery cell conveyed on the conveying apparatus 217, which facilitates smooth conveying of the battery cell on the conveying apparatus 217. The picking portion 2121 can reciprocate among the inspection position 3, the storage apparatus 214, and the cache apparatus 213, and because the storage apparatus 214 and the cache apparatus 213 are both located on the side, facing away from the paper peeling apparatus 215 in the fourth direction, of the pick-and-place apparatus 212, when the picking portion 2121 of the pick-and-place apparatus 212 picks the defective battery cell from the inspection position 3, the picking portion 2121 transfers the picked defective battery cell to the cache apparatus, and the picking portion 2121 picks the spare battery cell from the storage apparatus 214. The picking portion 2121 needs to cover a short distance, and therefore, an overall size of the pick-and-place apparatus 212 can be made small, which can reduce space occupied by the pick-and-place apparatus 212. In addition, there is enough space for arranging the cache apparatus 213 and the storage apparatus 214 on the side, facing away from the paper peeling apparatus 215 in the fourth direction, of the pick-and-place apparatus 212, which reduces a possibility that the cache apparatus 213 and the storage apparatus 214 interfere with another component.

It can be understood that arrangement of the conveying apparatus 217 and the paper peeling apparatus 215 of the inspection device 21 is not specifically limited. Exemplarily, the inspection device 21 may be provided with the conveying apparatus 217 other than the paper peeling apparatus 215, and the release paper of the battery cell may be peeled off at the position where the glue tape is pasted, and the battery cell conveyed to the inspection position 3 by the conveying apparatus 217 may be the battery cell with the release paper peeled off. Exemplarily, it can be determined, based on an actual need, whether to provide the inspection device 21 with the conveying apparatus 217.

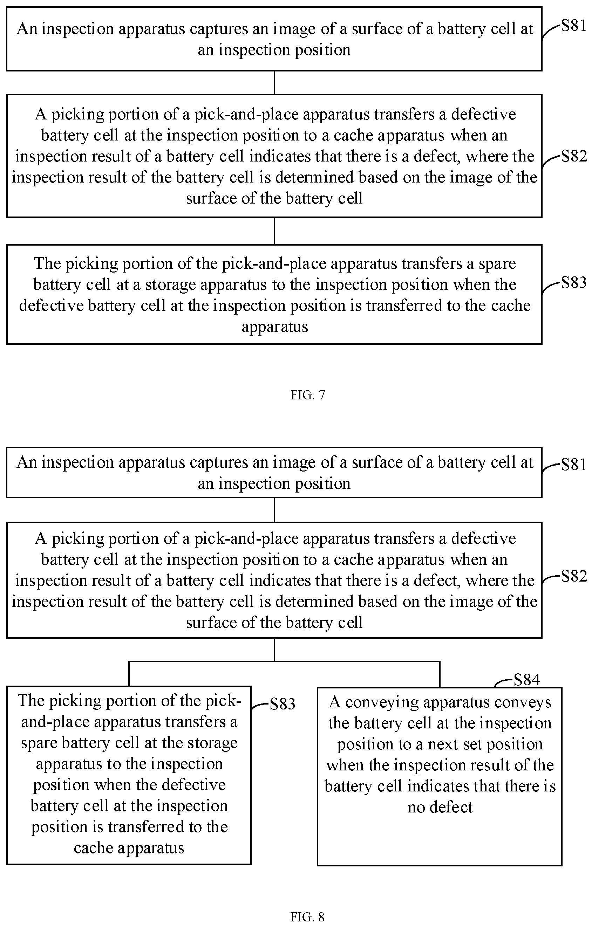

FIG. 7 is a third schematic flowchart of implementation of a gluing position inspection method according to an embodiment of this disclosure. An embodiment of this disclosure provides a gluing position inspection method. As shown in FIG. 7, the inspection method includes step S81 to step S83.

Step S81: An inspection apparatus captures an image of a surface of a battery cell at an inspection position.

Step S82: A picking portion of the pick-and-place apparatus transfers the defective battery cell at the inspection position to the cache apparatus when an inspection result of the battery cell indicates that there is a defect, where the inspection result of the battery cell is determined based on the image of the surface of the battery cell.

Step S83: The picking portion of the pick-and-place apparatus transfers a spare battery cell at the storage apparatus to the inspection position when the defective battery cell at the inspection position is transferred to the cache apparatus.

Exemplarily, the inspection result of the battery cell which indicates that there is the defect may mean that the gluing position of the battery cell does not meet a requirement. Exemplarily, the inspection result of the battery cell indicates that there is the defect, which may be caused because the gluing position of the battery cell does not meet the requirement.

In this embodiment of this disclosure, the image of the surface captured by the inspection apparatus 211 is inspected to obtain the corresponding inspection result and the picking portion 2121 directly removes the faulty battery cell, which reduces the costs and also shortens the processing time compared with online manual regluing. The picking portion 2121 automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack. The picking portion 2121 replaces the defective battery cell with the spare battery cell, and after replacement, the spare battery cell can enter a next processing procedure as appropriate, so that there is no need to stop a machine even if the defective battery cell is detected.

FIG. 8 is a fourth schematic flowchart of implementation of a gluing position inspection method according to an embodiment of this disclosure. In an embodiment, as shown in FIG. 8, based on the inspection method shown in FIG. 7, the inspection method further includes step S84.

Step S84: The conveying apparatus conveys the battery cell at the inspection position to a next set position when the inspection result of the battery cell indicates that there is no defect.

In this embodiment of this disclosure, the conveying apparatus 217 conveys the battery cell without the defect at the inspection position 3 to the next set position, and the inspection position 3 is vacated, so that the inspection apparatus 211 can place the next to-be-inspected battery cell.

In some embodiments, the inspection method further includes step S85 to step S87.

Step S85: An inspection apparatus captures an image of a surface of a spare battery cell at an inspection position.

Step S86: A picking portion of the pick-and-place apparatus transfers the defective spare battery cell at the inspection position to the cache apparatus when an inspection result of the spare battery cell indicates that there is a defect, where the inspection result of the spare battery cell is determined based on the image of the surface of the spare battery cell.

Step S87: The picking portion of the pick-and-place apparatus transfers a next spare battery cell at the storage apparatus to the inspection position when the defective spare battery cell at the inspection position is transferred to the cache apparatus.

Herein, the image of the surface of the battery cell captured by the inspection apparatus 211 includes an image of a surface of the spare battery cell in the storage apparatus 214 or an image of a surface of the battery cell conveyed by the conveying apparatus 217.

In this embodiment of this disclosure, the battery cell at the inspection position 3 is inspected, and the conveying apparatus 217 conveys the glued battery cell to the inspection position 3 for inspection. For the defective battery cell as indicated in the inspection result, the pick-and-place apparatus 212 replaces the defective battery cell at the inspection position 3 with the spare battery cell, but the spare battery cell does not necessarily have no defect. Because the inspected battery cell includes the spare battery cell or the battery cell conveyed by the conveying apparatus 217, the spare battery cell is also inspected after replacement in addition to the battery cell conveyed by the conveying apparatus 217, to reduce a possibility that the defective battery cell flows to a subsequent processing procedure.

It should be understood that "one embodiment" or "an embodiment" mentioned throughout the specification means that specified features, structures, or characteristics related to the embodiment are included in at least one embodiment of this disclosure. Therefore, "in one embodiment" or "in an embodiment" appearing throughout the specification does not necessarily refer to a same embodiment. In addition, these specified features, structures, or characteristics may be combined in one or more embodiments in any appropriate manner. It should be understood that, in the embodiments of this disclosure, sequence numbers of the foregoing processes do not mean execution sequences. The execution sequences of the processes should be determined according to functions and internal logic of the processes, and should not be construed as any limitation on the implementation processes of the embodiments of this disclosure. The foregoing serial numbers in the embodiments of this disclosure are only intended for description, and do not indicate advantages and disadvantages of the embodiments. It should be noted that the terms "include", "contain", or any of their variants are intended to cover a non-exclusive inclusion, such that a process, a method, an article, or an apparatus that includes a list of elements not only includes those elements but also includes other elements that are not expressly listed, or further includes elements inherent to such process, method, article, or apparatus. Without more constraints, an element preceded by "includes a..." does not preclude the presence of other identical elements in the process, method, article, or apparatus that includes the element.

In the several embodiments provided in this disclosure, it should be understood that the disclosed device and method may be implemented in other manners. The described device embodiment is merely an example. For example, the unit division is merely logical function division and may be other division in actual implementation. For example, a plurality of units or components may be combined or integrated into another system, or some features may be ignored or may not be performed. In addition, the displayed or discussed mutual couplings or direct couplings or communication connections of components may be implemented by using some interfaces. The indirect couplings or communication connections between the devices or units may be implemented in electrical, mechanical, or other forms. The foregoing units described as separate parts may or may not be physically separate, and parts displayed as units may or may not be physical units, may be located in one position, or may be distributed on multiple network elements. Some or all of the units may be selected based on an actual requirement, to achieve the objectives of the solutions in the embodiments. In addition, all functional units in the embodiments of this disclosure may be integrated into one processing unit, or each of the units may serve as one unit independently, or two or more units may be integrated into one unit. The foregoing integrated unit may be implemented in a form of hardware, or may be implemented in a form of a functional unit integrating hardware and software.

The foregoing descriptions are only implementations of this disclosure, but are not intended to limit the protection scope of this disclosure. Any variation or replacement readily figured out by persons skilled in the art within the technical scope disclosed in this disclosure shall fall within the protection scope of this disclosure.

### Industrial practicability

In the embodiments of this disclosure, the inspection result of the current battery cell is determined based on the image of the surface of the current battery cell, where the battery cell before the current battery cell is moved to the cache apparatus, and the spare battery cell in the storage apparatus is moved to the inspection position. In this way, first, the image of the surface is captured by the inspection apparatus at the inspection position, and the image of the surface of the current battery cell includes a gluing position; and the picking portion of the pick-and-place apparatus is controlled when the inspection result of the current battery cell indicates that there is the defect at the gluing position of the current battery cell, the inspection apparatus captures the image of the surface of the battery cell and performs inspection, so that full-automatic gluing inspection is implemented, which reduces costs and improves inspection efficiency compared with manual inspection; second, the picking portion directly removes the faulty battery cell, which reduces the costs and shortens processing time compared with online manual regluing; and finally, the picking portion automatically replaces the faulty battery cell with the spare battery cell, which ensures a production capacity of a production line, can meet a high-efficiency production requirement, and reduces a possibility of omitting regluing of the faulty battery cell as well, thereby reducing a possibility of grouping the battery cell with faulty glue as usual and ensuring heat dissipation and service life of the battery pack.

## Claims

1. A gluing position inspection device, comprising:
a frame;
an inspection apparatus, disposed on the frame, wherein the inspection apparatus is configured to capture an image of a surface of a battery cell at an inspection position;
a storage apparatus, disposed on the frame, wherein the storage apparatus is configured to store at least one spare battery cell;
a cache apparatus, disposed on the frame and configured to cache at least one defective battery cell; and
a pick-and-place apparatus, disposed on the frame, wherein the pick-and-place apparatus has a picking portion for picking and placing the battery cell, and the picking portion is able to reciprocate among the inspection position, the storage apparatus, and the cache apparatus.

2. The inspection device according to claim 1, wherein the storage apparatus comprises:
a first base;
a reference baffle plate connected to the first base;
an adjustment baffle plate, wherein a first accommodating cavity for accommodating the battery cell is enclosed by the adjustment baffle plate, the first base, and the reference baffle plate; and
a drive assembly, disposed on the first base, wherein the drive assembly is configured to drive the adjustment baffle plate to move, to position the battery cell in the first accommodating cavity.

3. The inspection device according to claim 2, wherein adjustment baffle plates are disposed at two ends of the first accommodating cavity in the first direction, and the drive assembly is configured to drive the adjustment baffle plates at both the ends to approach or leave each other in the first direction.

4. The inspection device according to claim 2 or 3, wherein the drive assembly comprises:
a gear, projected in an axial direction of the gear, wherein a rotation center of a projection zone of the gear is fixed relative to a position of a projection zone of the first base;
gear racks, meshed with the gear, wherein the gear racks are disposed on both opposite sides of the gear in a radial direction of the gear;
mounting bases, wherein a gear rack on each side is correspondingly provided with the mounting base, and the mounting bases are respectively connected to a corresponding gear rack and a corresponding adjustment baffle plate; and
a driver, configured to provide drive forces for transmission of the gears and gear racks, so that the adjustment baffle plates at both the ends approach or leave each other in the first direction.

5. The inspection device according to claim 4, wherein the driver is located on a side, facing toward the first accommodating cavity, of the first base, and the adjustment baffle plate on one end is disposed on the driver, so that the driver drives the adjustment baffle plate to move; and the driver is located at one end, facing away from the reference baffle plate in the second direction, of the adjustment baffle plate, the second direction intersects with the first direction, and the gear and the gear rack are both located between the reference baffle plate and the driver in the second direction.

6. The inspection device according to any one of claims 3 to 5, wherein there are multiple reference baffle plates, the multiple reference baffle plates are arranged at intervals in the second direction, and the second direction intersects with the first direction.

7. The inspection device according to any one of claims 3 to 6, wherein the reference baffle plate comprises multiple subplates, and the multiple subplates are sequentially arranged at intervals in the first direction.

8. The inspection device according to any one of claims 1 to 7, wherein the cache apparatus comprises:
a second base; and
side baffle plates, connected to the second base, wherein there are multiple side baffle plates, at least one second accommodating cavity for accommodating the battery cell is enclosed by the multiple side baffle plates and the second base, and multiple side baffle plates corresponding to each second accommodating cavity are arranged at intervals in a circumferential direction of the second accommodating cavity.

9. The inspection device according to any one of claims 1 to 8, wherein the inspection device further comprises:
a conveying apparatus, configured to convey the battery cell to the inspection position, wherein a direction in which the conveying apparatus conveys the battery cell is a third direction, and a direction intersecting with the third direction is a fourth direction; and
a paper peeling apparatus, configured to peel release paper off a glue tape of the battery cell at the inspection position, wherein the paper peeling apparatus is located on one side of the conveying apparatus in the fourth direction, the pick-and-place apparatus is located on the other side of the conveying apparatus in the fourth direction, and the storage apparatus and the cache apparatus are both located on one side, facing away from the paper peeling apparatus in the fourth direction, of the pick-and-place apparatus.

10. A gluing position inspection method, comprising:
capturing, by an inspection apparatus, an image of a surface of a battery cell at an inspection position;
transferring, by a picking portion of the pick-and-place apparatus, the defective battery cell at the inspection position to a cache apparatus when an inspection result of the battery cell indicates that there is a defect, wherein the inspection result of the battery cell is determined based on the image of the surface of the battery cell; and
transferring, by the picking portion of the pick-and-place apparatus, a spare battery cell at the storage apparatus to the inspection position when the defective battery cell at the inspection position is transferred to the cache apparatus.

11. The inspection method according to claim 10, wherein the inspection method further comprises:
conveying, by the conveying apparatus, the battery cell at the inspection position to a next set position when the inspection result of the battery cell indicates that there is no defect.

12. The inspection method according to claim 10 or 11, wherein the inspection method further comprises:
capturing, by the inspection apparatus, an image of a surface of the spare battery cell at the inspection position;
transferring, by a picking portion of the pick-and-place apparatus, the defective spare battery cell at the inspection position to the cache apparatus when an inspection result of the spare battery cell indicates that there is a defect, wherein the inspection result of the spare battery cell is determined based on the image of the surface of the spare battery cell; and
transferring, by the picking portion of the pick-and-place apparatus, a next spare battery cell at the storage apparatus to the inspection position when the defective spare battery cell at the inspection position is transferred to the cache apparatus.

13. A gluing position inspection system, comprising an inspection device and a control apparatus, wherein the inspection device comprises an inspection apparatus, a pick-and-place apparatus, a cache apparatus, and a storage apparatus;
the inspection apparatus is configured to capture an image of a surface of a current battery cell at an inspection position, wherein the image of the surface comprises a gluing position;
the control apparatus is configured to: determine an inspection result of the current battery cell based on the image of the surface of the current battery cell; and generate a control instruction and send the control instruction to the pick-and-place apparatus when the inspection result of the current battery cell indicates that there is a defect at the gluing position of the current battery cell; and
the pick-and-place apparatus is configured to: move the current battery cell to the cache apparatus and move the spare battery cell in the storage apparatus to the inspection position by using a picking portion based on the control instruction.

14. The inspection system according to claim 13, wherein
the inspection apparatus is further configured to capture an image of a surface of the spare battery cell at the inspection position; and
the control apparatus is further configured to: determine an inspection result of the spare battery cell based on the image of the surface of the spare battery cell; and generate a control instruction and send the control instruction to the pick-and-place apparatus when the inspection result of the spare battery cell indicates that there is a defect at a gluing position of the spare battery cell, so that the pick-and-place apparatus moves the spare battery cell to the cache apparatus and moves a next spare battery cell in the storage apparatus to the inspection position by using the picking portion.

15. The inspection system according to claim 13 or 14, wherein the inspection device further comprises a paper peeling apparatus;
the control apparatus is further configured to send a paper peeling instruction to the paper peeling apparatus; and
the paper peeling apparatus is configured to peel release paper off the surface of the current battery cell based on the paper peeling instruction, to expose the gluing position of the current battery cell.

16. The inspection system according to any one of claims 13 to 15, wherein the inspection system further comprises a prompt apparatus; and the control apparatus is further configured to perform at least one of the following:
obtaining a first number of battery cells in the cache apparatus, generating first prompt information when the first number is not less than a first threshold, and sending the first prompt information to the prompt apparatus, so that the prompt apparatus outputs the first prompt information; and
obtaining a second number of spare battery cells in the storage apparatus, generating second prompt information when the second number is not greater than a second threshold, and sending the second prompt information to the prompt apparatus, so that the prompt apparatus outputs the second prompt information.

17. The inspection system according to any one of claims 13 to 16, wherein
the control apparatus is further configured to send a capturing instruction to the inspection apparatus; and
the inspection apparatus is configured to capture an image of a surface of the current battery cell based on the capturing instruction.

18. The inspection system according to any one of claims 13 to 17, wherein
the control apparatus is further configured to: obtain information of the current battery cell; and generate an adjustment instruction and send the adjustment instruction to the pick-and-place apparatus when the information of the current battery cell is different from information of a previous battery cell; and
the pick-and-place apparatus is further configured to update a working parameter of the picking portion based on the adjustment instruction.

19. A gluing position inspection method, applied to an inspection device, wherein the inspection device comprises an inspection apparatus, a pick-and-place apparatus, a cache apparatus, and a storage apparatus, and the inspection method comprises:
determining an inspection result of a current battery cell based on an image of a surface of the current battery cell, wherein the image of the surface of the current battery cell is captured by the inspection apparatus at the inspection position, and the image of the surface of the current battery cell comprises a gluing position; and
controlling a picking portion of the pick-and-place apparatus to move the current battery cell to the cache apparatus and move a spare battery cell in the storage apparatus to the inspection position when the inspection result of the current battery cell indicates that there is a defect at the gluing position of the current battery cell.

20. The inspection method according to claim 19, wherein the inspection method further comprises:
determining an inspection result of the spare battery cell based on an image of a surface of the spare battery cell; and
controlling a picking portion of the pick-and-place apparatus to move the spare battery cell to the cache apparatus and move a next spare battery cell in the storage apparatus to the inspection position when the inspection result of the spare battery cell indicates that there is a defect at a gluing position of the spare battery cell.

21. The inspection method according to claim 19 or 20, wherein the determining an inspection result of a current battery cell based on an image of a surface of the current battery cell comprises:
identifying the image of the surface of the current battery cell to obtain surface rim information and gluing rim information of the current battery cell; and
determining the inspection result of the current battery cell based on the surface rim information and gluing rim information of the current battery cell.

22. The inspection method according to claim 21, wherein the surface rim information of the current battery cell comprises at least one rim, the gluing rim information of the current battery cell comprises at least one gluing rim, and each rim is in a one-to-one correspondence with each gluing rim; and
the determining the inspection result of the current battery cell based on the surface rim information and gluing rim information of the current battery cell comprises:
determining a distance between each rim and a corresponding gluing rim; and
determining the inspection result of the current battery cell based on each distance.

23. The inspection method according to claim 22, wherein the determining the inspection result of the current battery cell based on each distance comprises at least one of the following:
using, as the inspection result of the current battery cell, the first inspection result indicating that there is no defect when each distance is in the corresponding distance range; or
using, as the inspection result of the current battery cell, the second inspection result indicating that there is a defect when at least one distance is out of the corresponding distance range.

24. The inspection method according to any one of claims 19 to 23, wherein the inspection method further comprises:
obtaining the number of battery cells in the target apparatus; and
generating and outputting prompt information corresponding to the target apparatus when the number of battery cells in the target apparatus meets a preset condition, wherein the target apparatus comprises at least one of the following: the cache apparatus and the storage apparatus.
